# EUROPEAN PATENT APPLICATION

(11) **EP 4 023 902 A1**
(43) Date of publication of application: **06.07.2022**
(21) Application number: 21218054.1
(22) Date of filing: 29.12.2021
(51) Int. Cl.: F16D 55/00, F16D 65/00, F16D 65/12

(54) **BRAKE DISC WITH AERODYNAMIC COVER**

(30) Priority: 30.12.2020 IT 202000032762
(71) Applicant: Mariani, Riccardo, 20014 Nerviano (MI) (IT)
(72) Inventor: Mariani, Riccardo, 20014 Nerviano (MI) (IT)
(74) Representative: Lampis, Marco

(57) **Abstract**

A brake disc (10) comprises a braking band (11) and a connecting flange (12) arranged radially inside the braking band. The braking band (11) has lugs (13) radially directed towards the axis of rotation (14) of the disc and connected to the connecting flange (12). Disc covers (15, 16) covering the connecting flange are present over the two faces of the connecting flange. In this way, the aerodynamic turbulence due to rotation of the disc is reduced.

## Description

The present invention relates to a brake disc of the type having a braking band connected to the associated connecting flange for connection to the wheel. In particular, this brake disc may be intended for use in the motorcycling sector. Modern brake discs, for example of the floating type, are composed of a braking band, where the braking torque is applied, and a connecting flange which fastens the band to the wheel. At intervals along the internal circumference of the braking band there are connections for the mutual floating fastening together of band and flange.

In motorcycles, especially of the high-performance type (for example racing motorcycles), the use of floating brake discs results undoubtedly in significant advantages. However, it should also be considered that the rotating mass of the brake disc has a significant impact on the performance of a vehicle.

The flange, since it forms a non-suspended part of the wheel assembly, is to be regarded as playing a very important part in the dynamics of the vehicle and its weight is a detail not to be underestimated: at present light alloy (mainly aluminum alloy) materials are used, these being suitably machined and lightened in order to obtain the correct mechanical characteristics together with lightness. All modern brake discs use lightened flanges with varyingly shaped openings thus creating, overall, spoke elements between the wheel hub and braking band.

However it has been noted that the manufacture of the connecting flanges provided with openings in order to achieve the desired results in terms of strength and low weight results in a high-speed rotating surface with a configuration such as to produce high turbulence in the zone of the brake disc which becomes increasingly greater with an increase in the speed of the vehicle. This aerodynamic turbulence negatively influences the speed of the wheel and the cooling of the parts close to it, such as the brake pads, the brake calipers and the oil of the braking circuit. Furthermore, with the increase in the performance, at present there is the tendency to use braking bands with increasingly larger diameters and flanges with an increasingly greater camber (i.e. offset distance from the hub where the band is fastened to the wheel) in order to provide better cooling and reduce the deformation of the braking bands due to the high operating temperatures. This results in the turbulence produced by the flanges rotating at high speed becoming even more critical.

Moreover, in order to obtain data relating to the speed of rotation of the wheel assembly, at present various methods are being used, the most efficient and widely used method being the phonic wheel system, namely a metal ring, which is shaped or perforated so as to obtain "solid/void" reading windows, the passage of which during rotation of the wheel is read by a suitable sensor (generally of the inductive type). This ring is provided with its own supports and is fixed along the axis of rotation of the wheel, usually employing the same systems for fixing the flange of the brake disc. The ring and the supports must obviously be sufficiently strong to avoid deformation due to the stress acting on them during use of the vehicle. This, however, results in increased weight and further aerodynamic problems affecting the wheel assembly.

The general object of the present invention is to provide a brake disc with a more sophisticated aerodynamic behavior, while maintaining low weight values.

In view of this object the idea which has occurred, according to the invention, is to provide a brake disc comprising a braking band and a connecting flange arranged radially inside the braking band, the braking band having lugs radially directed towards the axis of rotation of the disc and connected to the connecting flange, characterized in that disc covers covering the connecting flange are present over the two faces of the connecting flange.

In order to illustrate more clearly the innovative principles of the present invention and its advantages compared to the prior art, an example of embodiment applying these principles will be described below with the aid of the attached drawings. In the drawings:
- Figure 1 shows an exploded schematic perspective view of a brake disc provided in accordance with the principles of the present invention;
- Figure 2 shows a schematic internal view of an element of brake disc according to the invention;
- Figure 3 shows a schematic perspective view of the brake disc according to the invention with the element according to Figure 2 mounted;
- Figures 4 and 5 show schematic perspective views of a brake disc according to the invention viewed from the opposite side to that shown in Figure 3 and with a second element removed and mounted, respectively;
- Figure 6 shows a schematic partial view cross-sectioned along a spoke element of the brake disc;
- Figure 7 shows a view similar to that of Figure 6, but in solid lines.

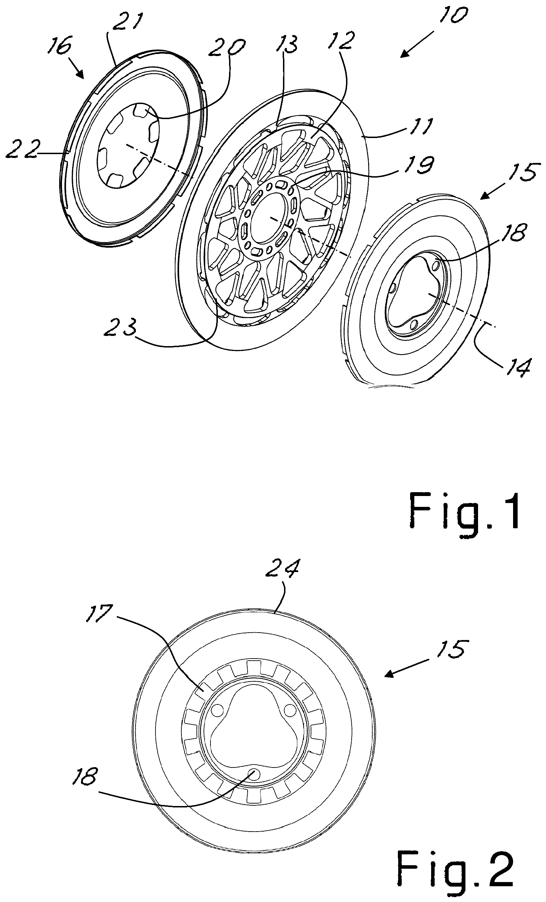

With reference to the Figures, Figure 1 shows a brake disc (advantageously of the floating type) designed in accordance with the invention and indicated overall by 10. The disc 10 comprises a braking band 11 and a connecting flange 12 which is arranged radially inside the braking band. The connecting flange is intended to be fixed to the wheel using a technique known per se (for example by means of suitable screws) and therefore is not further described or shown here.

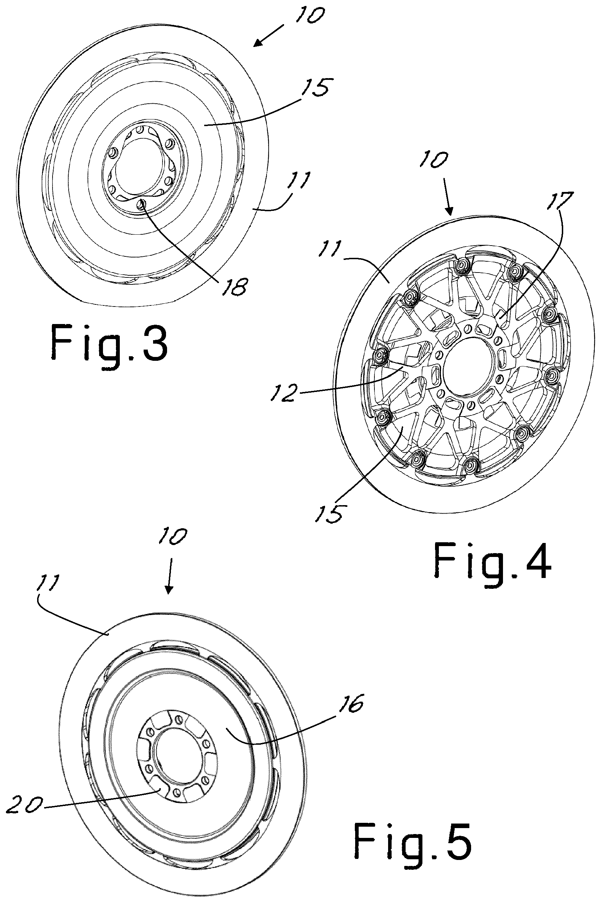

The braking flange 11 has lugs 13 which are radially directed towards the axis of rotation 14 of the disc so as to be connected (advantageously in a floating manner) to the connecting flange 12 by means of connecting systems 15 (advantageously visible in Figure 4 and, for example, formed by pins, screws, elastic rings, etc.). The connection may be realized as is known so as to have a suitable axial play depending on the specific practical working requirements of the brake, also based on the materials used and the operating temperatures of the brake, as may be easily imagined by the person skilled in the art, in order to avoid for example deformations due to heat.

The lugs 13 are generally arranged angularly spaced along the inner edge of the braking band. For example, these lugs may vary from six to ten in number, being regularly spaced around the inner circumference of the braking band.

The braking band will be made of suitable material, known for this application, for example a high-strength steel alloy. The band with the lugs may be formed as one piece, for example by means of shearing, laser cutting or in any case by means of removal of material from a solid disc.

The connecting flange may be made, again of suitable material, for example steel or aluminum alloy, which has been machine-turned (in particular milled) and/or formed by means of fusion.

In order to achieve a low weight, the flange will generally be provided with a large number of openings, having a known shape considered to be more suitable for limiting the weight, while maintaining the adequate desired structural strength.

The brake disc further comprises a pair of disc covers 15 and 16 which are arranged on both sides of the connecting flange 12 so as to cover it. The covers are advantageously each made with a central passage for the wheel hub.

As shown in Figure 2 (where the cover 15, on the outside of the wheel, is shown from the inner side (namely towards the flange 12), the disc cover 15 may advantageously comprise a phonic wheel 17 formed by a series of radial teeth which form the suitable alternating arrangement of solids and voids along the circumference of the phonic wheel so as to be detectable by a conventional inductive sensor (not shown) which will be placed on the outside of the brake disc according to a known method. For example, the phonic wheel may be made of suitable magnetic material.

For the purposes of fixing, the cover 15 may comprise, in a zone close to the center, holes 18 which coincide with some of the corresponding holes 19 in the flange 12 which are intended to receive through-screws (not shown) designed to fix the flange to the wheel. In this way, at least some of the screws for fixing the brake disc to the wheel will also stably fix the cover 15.

In Figures 3 and 4 the positioning of the cover 15 on the flange 12 can be clearly seen.

The cover 16, which is instead on the inside of the brake disc with respect to the wheel and therefore on the opposite side of the flange to the cover 15, may also comprise only radial flanges 20 which will remain fixed between the flange 12 and the wheel hub and which will be arranged in the empty spaces between the holes 19 for receiving the flange fixing screws, as is clear from Figure 5.

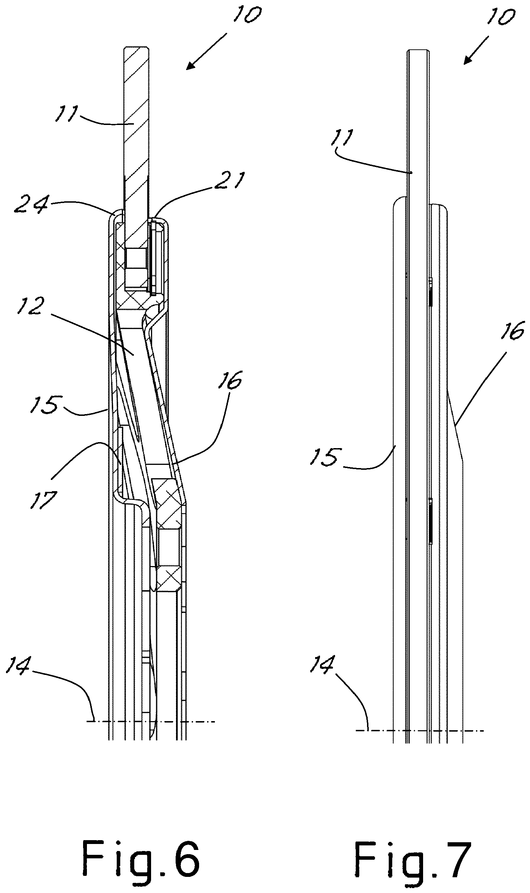

Advantageously, in order to obtain a better mechanical sealing action between the covers and the flange and also allow the manufacture of thinner and lighter covers, the covers may also be peripherally engaged by means of interference along their outer edge. For this purpose, a peripheral edge may be for example provided projecting in an axial direction around the cover and directed towards the flange 12, being shaped so as to snap-engage with a certain part of the flange. For example, as can be seen in Figure 1 for the cover 16, a projecting peripheral edge may define elastic fins 21 separated by empty spaces 22 so as to engage inside corresponding openings 23 in the zone for connecting together the braking band 11 and the connecting flange, between the lugs 13. A radially internal undercut on the fins 21 may also increase the gripping force, as can be easily understood from Figure 6.

A similar solution may also be used for the outer cover 15.

As can be seen again in Figure 6, the outer cover 15 may in any case have a continuous edge 24 axially directed towards the connecting flange so as to enclose more fully the flange on the edge.

At this point it is clear how the objects of the invention have been achieved.

As can be clearly seen also from Figure 7, the brake disc with the covers mounted ensures a more aerodynamic profile and a consequent substantial reduction in the turbulence generated by the rotation of the flange. As a result it is possible to obtain more orderly and manageable air flows in order to improve the cooling of the aforementioned components of the braking system (pads, calipers, oil).

Moreover, owing to the innovative structure according to the invention, it is possible to maintain rotating masses which are extremely light without the aerodynamic problems associated with the prior art. At the same time, the structure may be easily made and assembled and is very strong.

The two covers may be for example made as shells with a thin wall and so as to have a suitably rigidity and a good mechanical strength able to withstand the stresses caused by the movement of the wheel. However, since they have only the function of managing the aerodynamic flows, they may in any case be made of light and thin material. For example, they may be made of plastic or composite material or glass fiber. They may also be made in a stratified manner.

In particular, in the case where the phonic wheel is provided, said wheel may also be incorporated between the layers of the cover, in addition to being able to be fixed or glued in place on the side face of the cover.

The phonic wheel which is incorporated in the cover, instead of being a separate element fixed to the wheel as in the prior art, is able achieve a reduction in weight owing to the rigidity of the disc-shaped covers and allows other heavier structural parts to be dispensed with.

Obviously, the above description of an embodiment applying the innovative principles of the present invention is provided by way of example of these innovative principles and must therefore not be regarded as limiting the scope of the rights claimed herein. For example, the brake disc described is particularly suitable for motorcycles, but may also be advantageously mounted also in other types of vehicles, such as motor vehicles.

The exact configuration of the flange and the consequent form of the covers may be different from that shown, depending both on technical strength and elasticity requirements and on the particular mounting arrangement on the wheel, as may be easily imagined by the person skilled in the art. The braking band may also have a different configuration from that shown and may also comprise, for example, through-holes for performing cooling and/or dynamic cleaning of the braking surface, as is well-known in the specific technical sector.

The two covers may also advantageously have several circumferential ribs or variations in height so as to ensure a low flexibility in the axial direction also at the minimum wall thicknesses. It is also understood that, on the basis of the description provided here, the solutions shown or described for one of the two covers may be used entirely or partly on the other cover.

## Claims

1. Brake disc (10) comprising a braking band (11) and a connecting flange (12) arranged radially inside the braking band, the braking band (11) having lugs (13) radially directed towards the axis (14) of rotation of the disc and connected to the connecting flange (12), **characterized in that** over the two faces of the connecting flange there are disc covers (15, 16) covering the connecting flange.

2. Brake disc (10) according to claim 1, **characterized in that** at least one of the two covering covers (15, 16) has an area close to the center with holes (18) for receiving screws, which coincide with some of the corresponding holes (19) in the flange (12) which are designed to accommodate through-screws suitable for fixing the flange to the wheel.

3. Brake disc (10) according to claim 1, **characterized in that** at least one of the two covering covers (15, 16) has an area close to the center with fins (20) radially directed towards its center and intended to fasten the cover when the brake disc is mounted on a wheel.

4. Brake disc (10) according to claim 1, **characterized in that** at least one of the two covering covers (15, 16) has a peripheral edge (21, 24) projecting towards the connecting flange (12).

5. Brake disc (10) according to claim 4, **characterized in that** the peripheral edge (21, 24) projecting towards the connecting flange (12) is elastically snap-engaged onto the connecting flange (12).

6. Brake disc (10) according to claim 4, **characterized in that** at least one of the two covering covers (15, 16) has, incorporated within it, a phonic wheel (17).

7. Brake disc (10) according to claim 6, **characterized in that** the phonic wheel (17) is made of magnetic material.

8. Brake disc (10) according to claim 6, **characterized in that** the phonic wheel (17) is applied on the inside of one of the two covers.

9. Brake disc (10) according to claim 1, **characterized in that** the two covers (15, 16) are made of plastic or composite material and/or glass fiber.

10. Brake disc (10) according to claim 1, **characterized in that** the two covering covers (15, 16) are made with a stratified wall.
